Europäisches Patentamt

European Patent Office

Office européen des brevets

(19)

(11) Publication number: **0 432 102 A1**

(12) **EUROPEAN PATENT APPLICATION**

(21) Application number: 90830131.0

(22) Date of filing: 29.03.90

(51) Int. Cl.⁵: **B60P 3/24, B65G 53/28, G01G 19/08**

(30) Priority: 06.12.89 IT 375189

(43) Date of publication of application:
12.06.91 Bulletin 91/24

(84) Designated Contracting States:
DE ES FR GB SE

(71) Applicant: Simoncini, Marco
Via Roma, 11/A
I-60020 Offagna (AN) (IT)

(72) Inventor: Simoncini, Marco
Via Roma, 11/A
I-60020 Offagna (AN) (IT)

(74) Representative: Mascioli, Alessandro, Prof.Dr.
c/o A.N.D.I. Associazione Nazionale degli
Inventori Via Urbana, 20
I-00184 Roma (IT)

(54) A vehicle for the transport and the unloading of loose products.

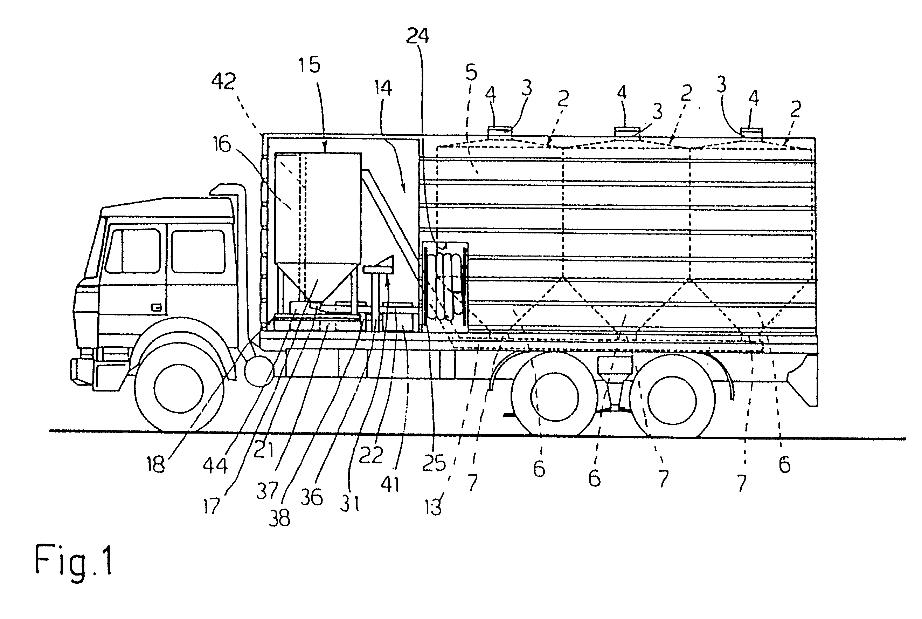

(57) The vehicle (1) according to the present invention provides for the transport and unloading of loose products from bins (2) in which said products are stored. The vehicle comprises: a lung-container (15) provided in an apposite space (14); a first duct (13) for the products, from bin (2) to the lung-container (15); first means (38) for the control of the products' flow along said first duct (13); second means (37) for the weighing of the quantity of products led inside said lung-container (15); a second duct (22) for the products, from the lung-container (15) to a container external to said vehicle (1); and third means (38) for the control of the products' flow along the second duct (22) (figure 1).

Fig.1

EP 0 432 102 A1

# A VEHICLE FOR THE TRANSPORT AND THE UNLOADING OF LOOSE PRODUCTS

The present invention concerns a vehicle for the transport and the unloading of loose products like food products or small industrial products.

At present, the vehicles for the transport of loose products have one or more bins in which said products are kept. The house-distribution of the products to the clients presupposes that the client is provided with means for unloading and weighing the products.

It is the aim of the present invention to realize a vehicle for the transport and unloading of loose products that allows the steps of weighing and unloading of the loose products quickly, in a hygienical place, with high precision and with low costs.

Further aims and advantages of the present invention will be described more in detail hereinbelow.

According to the present invention, a vehicle is provided for the transport and unloading of loose products comprising at least one bin for the storing of said products, characterized in that it comprises at least a space ; a lung-container provided in said space ; a first duct for said products, from said bin to said lung-container ; first means provided inside said vehicle, for the control of said products' flow along said first duct ; second means provided inside said space, for weighing the quantity of said products led inside said lung-container ; a second duct for said products, from said lung-container to a container external to said vehicle ; and third means placed inside said vehicle, for the control of said products' flow along said second duct.

For a better understanding of the object of the present invention, a preferred embodiment will be described hereinbelow for exemplifying and not limiting purposes, referring to the enclosed drawings, in which the figures show :

    figure 1, a view of the vehicle provided with a weighing and unloading system for the transported loose products ;

    figure 2, a block scheme of the system shown in figure 1.

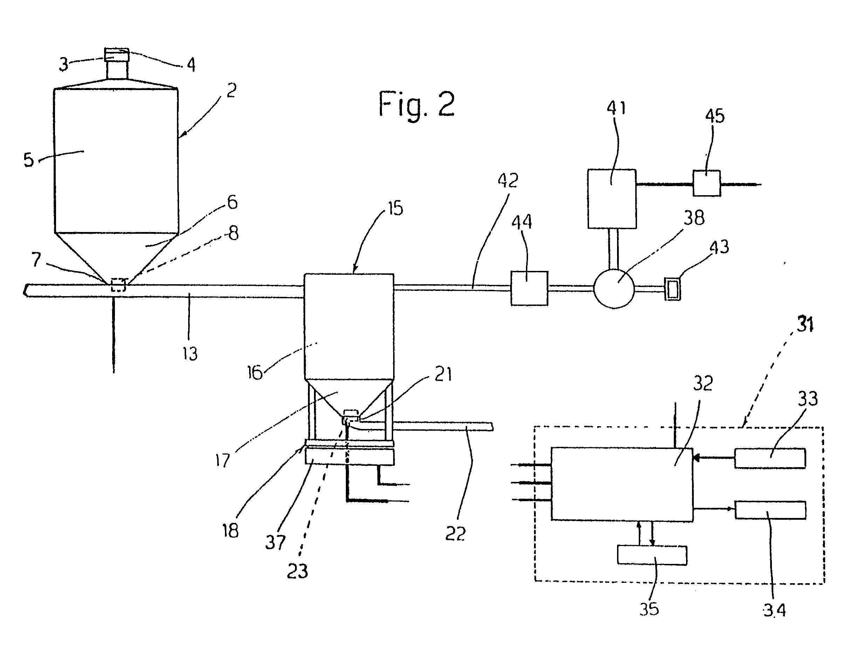

According to figure 1, 1 shows a vehicle for the transport of loose products like e.g. food products like flour, wheat etc. Vehicle 1 has three bins 2 that may be used for the same products or for different products. Bins 2 are placed side-by-side and have a longitudinal vertical axis. Each bin 2 has on top an inlet opening 3 and corresponding thereto a sealing cover 4 is provided. Each bin 2 has an upper portion 5 mainly cylindrical, and on the upper wall thereof the inlet opening 3 is realized, and a lower portion 6 in the shape of a truncated cone, and on the lower end thereof an outlet opening 7 is realized. Corresponding to each outlet 7 an interception valve 8 with electromagnetic control is provided shown in figure 2 in a scheme, because of known kind. All outlets 7 lead into a common main duct 13.

According to what has been shown in figures 1 and 2, in said vehicle 1 a system is provided for weighing and unloading the products stored in bins 2. Said system is housed in a space 14 obtained in the coachwork of the vehicle 1 near the driving cab of the same and provided with a closing door that is not shown because of known kind. Inside said space 14, on a frame 18, a lung-container 15 is mounted having also a vertical axis, and having an upper portion 16 of cylindrical shape and a lower portion 17 in the shape of a truncated cone. In the portion 17 an outlet opening 21 is realized from which parts a duct 22 for the unloading of the products, and corresponding to which a further interception valve 23 is mounted. Beside the space 14 a further small space 24 is provided inside which a spool 25 having a motorized control, for the winding and unwinding of said duct 22.

Relating to figure 2, above mentioned system comprises furthermore an electronic device 31 comprising a computer 32, a programming keyboard 33, a video 34 and a memory lock 35. The device 31, as shown in figure 1, is supported by a small desk 36 fixed to a base wall defined inside space 14.

The system comprises furthermore : a loading cell 37 of electronic kind on which the frame 18, and therefore the container 15, are resting ; a pump 38 that may be operated by an electronic motor 41 ; a duct 42 along which said pump 38 is provided, and having a first end that forms an air intake and onto which a first filter 43 is mounted ; and a second end that leads in portion 16 of ducts 15 ; a second filter 44 monted along said duct 42, between pump 28 and container 15 ; and an electronical lock 45 used for inverting the electric feeding of motor 41, so as to invert the rotation of the outlet shaft of the same, and therefore for controlling the functioning of pump 38 like an air aspirator from container 15, or like a compressor of such air.

From said computer depend valves 8, valve 23, the loading cell 37, the lock 45, the keyboard 33, the video 34 and the lock 35.

As already mentioned, vehicle 1 transports in its bins 2 loose products that may be of various kind. Once reaced the client and heard his requests about the kind and the weight of the products he needs, the operator writes these data on the keyboard 33 — and they are obviously visible on the video 34. The data inserted are led to the computer 32 and to the memory lock 35. According to these data, the computer 32 controls valve 8 for obtaining the opening of that bin 2 containing the requested product and, by means of motor 41, operates pup 38 which aspires air from container 15. Such aspiration determines, along duct 13, a products' flow from the corresponding bin 2 to the container 15. The weighed quantity of products that enter the duct is controlled — by means of the weigh control of the loading cell 37 — by computer 32 that controls the closing of outlet 7 of the mentioned bin as well as the blocking of pump 38, and therefore the inlet of the products into container 15, once the predetermined weight is obtained. If the free end of duct 22 has been duly connected to a client's silos, container or storage, it will now be possible, by means of keyboard 33, to realize the unloading of the products from container 15 to the client's silos. On said control, the computer 32 controls, be means of lock 45, the inversion of the electric feeding of motor 41, and therefore controls the functioning of the pump.38 like a compressor and controls, by operating valve 23, the opening of outlet 21. Now compressed air is led into container 15 and this causes, along duct 22, the flow of the products from container 15 to the one of the client. The loading cell 37 surveys the decreasing number of products stored in container 15 so that, once the tare weight (container 15 and frame 18) is reached, the computer 32 controls the closing of outlet 21 and the blocking of pump 38. Now the unloading of products from a second bin may be performed. It shall be noted that it is possible to perform a step-by-step unloading, just inserting in the computer the weight to unload at each step, so that it will be possible, e.g., to unload a determined quantity of products into a first client's silos and further quantities into further silos'. For defining such unloading strategy, the same will be inserted by means of keyboard 33, so that the computer 32 may block pump 38 and close outlet 21 at the end of each step. A further unloading strategy may also provide the step-by-step immission into container 15 of a predetermined quantity of products from at least two bins, so that a mixture of predetermined quantities of products will be obtained in container 15. One should think, e.g., to the transport of raw materials and to the unloading of intermediate materials consisting of mixtures of said raw materials. The filter 43 prevents the immission of dust into container 15, while filter 44 prevents part of the products — in the case of powder products like stearchy food — from being sucked by pump 38, thus preventing a correct working thereof.

From what described hereinbefore, it seems to be evident that the object of the present invention has many advantafes.

In particular, a vehicle has been realized provided not only with bins for the transport of products, but also with means that allow the automatic weighing of the products to be unloaded into a lung-container and which allow, making use of the same elements that control the flow of the products towards the lung-container, the unloding of said products. The work of the operator consists only of inserting the data through the keyboard and of realizing the connection between the unloading duct and the client's silos. It seems to be evident that the weighing and unloading system allows a considerable time reduction, making use of less workers for said unloading operation, an extreme precision of the weighed quantity of the products to be unloaded and the realization of said unloading step under highly hygienical conditions. The precision of the unloaded quantities, due to the fact that said quantities may be memorized together with a client's code, allows to avoid possible thefts of products by the travelling personnel, because it is possible to effect a control between the quantity immitted into the bin anda the one unloaded. The realization of the unloading step in a hygienical ambient appears evident from the fact that, due to the system according to the present invention, it is possible to keep ducts 13 and 22 and container 15 always clean. Infact, before or after each unloading it is possible to make pump 38 work like an aspirator keeping outlets 7 closed, so as to obtain the cleaning of duct 13, and after make pump 38 work like a compressor keeping outlet 21 openi, so as to obtain the cleaning of container 15 and of duct 22. As it has been already mentioned, the leading of the products inside the ducts takes place, due to the presence of filters 43 and 44, without any contact with particles or dust present in the surrounding ambient. The whole weighing and unloading system is mounted inside the vehicle, and it is therefore possible to realize the unloading of the products under any atmospherical circumstance and in any place, and the client must not necessarily be provided with particular systems. With said system it is possible, as already mentioned, to unload step-by-step, or to realize, inside container 15, a mixture between the products of the various bins 2, which will then be unloaded. It shall be finally underlined that above mentioned system has been realized with already known devices that may be easily available. This fact together with the consideration that the system is of easy realization makes the same result of low construction costs.

Finally, it seems to be evident that the vehicle 1 as well as the weighing and unloading system may be varied without therefore exceeding the limits of the present invention.

In particular, a variant to what has been described and shown until now may consist in the number of the bins 2, as well as the ducts leading the products into container 15. E.g., instead of duct 13, a different transport device may be installed, or a duct may be provided for each bin. Instead of the loading cell 37, a different weighing device may be provided, like e.g. a mechanical or electromechanical scales, keeping in mind that, if a mechanical scales is used, it won't be possible any more to realize the blocking of the products' flow by means of device 31, because in this case the operator himself must manually interrupt the flow when he reads the weight. The motorization of the pump 38 may be derived from the force intake of the vehicle 1, and e.g. an oleodynamic system may be mounted that will be operated by said force intake and that will control pump 38. Obviously, it is in any case necessary to mount an invertor block for controlling the functioning of the pump like an aspirator or like a compressor. Also in this case, the presence of the operator is requested for transmitting the single control operations. The device 31 will be therefore transformed into a manual switchboard, and for determined element automatic. Finally it seems to be evident that, as said weighing means are provided inside said vehicle 1, it will be necessary to provide for appropriate hooking means of the movable parts to the walls of the vehicle while moving, and for a correct weighing and balancing of the weighing elements, before the weighing step, for avoiding uncorrect surveys due, e.g., to a slope.

## Claims

1. A vehicle for the transport and unloading of loose products comprising at least one bin (2) for the storing of said products, characterized in that it comprises : a space (14) ; a lung-container (15) provided in said space (14) ; a first duct (13) for the products, from bin (2) to the lung-container (15) ; first means (38) for the control of the products' flow along said first duct (13) ; second means (37) for the weighing of the quantity of products led inside said lung-container (15) ; a second duct (22) for the products, from the lung-container (15) to a container external to said vehicle (1) ; and third means (38) for the control of the products' flow along the second duct (22).

2. A vehicle according to claim 1, characterized in that said bin (2) has an inlet opening (3) in correspondence to which a closing cover (4) is provided, and an outlet opening (7) in correspondence to which a first interception valve (8), preferably with electric control, is provided.

3. A vehicle according to claims 1 and/or 2, characterized in that said lung-container (15) has a first inlet opening through which said products, led by said first duct (13), are stored in said lung-container (15), and an outlet opening (21) in correspondence to which a second interception valve (23), preferably with electric control, is provided.

4. A vehicle according to the precedent claims, characterized in that is comprises an electric device (31), preferably mounted inside said space (14), for the control of said first and third means (38), and for the control of said first valve (8) and of said second valve (23).

5. A vehicle according to claim 4, characterized in that said first and third means comprise a single, common pumping means (38) provided with motor means (41) controlled by said device (31): in use, said means (38) may work like an aspirator of the air present in said lung-container (15) for realizing the leading into the same from said bin (2) of said products, as well as a compressor of said air for obtaining the leading of said products stored in said lung-container (15) from the same along said second duct (22).

6. A vehicle according to claim 5, characterized in that said pumping means (38) is provided along a first duct (42), a first end thereof forming an air intake, and a second end thereof getting into a second inlet opening provided in said lung-container (15).

7. A vehicle according to claim 6, characterized in that along said first duct (42) at least one filter (43 and 44) is mounted in correspondence to said first end and/or between said means (38) and said lung-container (15).

8. A vehicle according to at least one of the precedent claims, characterized in that said second means for the weighing comprise a mechanical scales.

9. A vehicle according to at least one of the claims from 1 to 7, characterized in that said second means for weighing comprise a leading cell (37) of electronic kind.

10. A vehicle according to claims 4, 5 and 9 characterized in that said device (31) comprises : a computer (32) for the control of said first valve (8), said secondo valve (23) and said first and third means, and for the survey through said loading cell (37) the weight of said products stored in said lung-container (15) ; a programming keyboard (33) through which the operator may insert the weight of the products to be unloaded and the unloading strategy ; a video (34), on which the data inserted by means of the keyboard (33) are visible ; and a memory lock (35) for memorizing all data insrted and the unloaded quantities of said products.

11. A vehicle according to any of the precedent claims, characterized in that said ducts comprise a relative duct (13 and 22), and in the presece of a spool (25), preferably motorized, for winding and unwinding said duct (22) of said second duct.

12. A vehicle according to claim 11, characterized in that it comprises a plurality of said bins (2), and characterized in that said first duct comprises a single duct (13) and a connection between each of said bins (2) and the latter one.

13. A vehicle according to any of the precedent claims characterized in that it comprises means for hooking to a fix part the movable parts of said weighing means, and meanas for the balancing of said second means for weighing before the weighing steps so as to prevent uncorrect surveys due, e.g., to a slope.

Fig.1

## Fig. 2

European Patent Office

## EUROPEAN SEARCH REPORT

Application Number

EP 90 83 0131

### DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 005 542 (VON BENNIGSEN-MACKIEWICZ) * Claims 1,10-17,23-26; figures 1,6 * | 1-4,8-10,12,13 | B 60 P 3/24 B 65 G 53/28 G 01 G 19/08 |
| Y | | 5,7,11 | |
| X | DE-A-1 580 786 (SCHAUBSTAL-WERKE) * Claims 1-3,8-12; figures 1,2 * | 1,8,12,13 | |
| X | DE-A-2 641 793 (EICHHORN) * Whole document * | 1,8,13 | |
| Y | GB-A-1 371 375 (BROWN) * Claim 1; page 1, left-hand column, lines 34-40 * | 5-7 | |
| A | GB-A-1 090 320 (HERMANNS) * Claims 1-3; figure 1 * | 1,5,6 | |
| A | GB-A-2 213 601 (NEVILLE CHARROID LTD et al.) * Claims 1,8,14-16; figure 3 * | 1,8 | TECHNICAL FIELDS SEARCHED (Int. Cl.5) |
| Y | FR-A-2 070 935 (LA GENERALE INDUSTRIELLE S.A.) * Claim 1; figures 1,2 * | 11 | B 60 P B 65 G G 01 G |

The present search report has been drawn up for all claims

| Place of search | Date of completion of the search | Examiner |
|---|---|---|
| THE HAGUE | 04-03-1991 | NORDLUND J.O. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)